# EUROPEAN PATENT APPLICATION

(11) **EP 4 509 251 A1**
(43) Date of publication of application: **19.02.2025**
(21) Application number: 23191666.9
(22) Date of filing: 16.08.2023
(51) Int. Cl.: B23C 5/10

(54) **MILLING TOOL**

(71) Applicant: WALTER AG, 72072 Tübingen (DE)
(72) Inventor: Martin, Marx, 720 72 Tübingen (DE); Veit, Markus, 720 72 Tübingen (DE)
(74) Representative: Sandvik

(57) **Abstract**

The present invention relates to a milling tool for metal cutting comprising a cutting head (1) comprising a plurality of radially protruding and axially extending teeth (6). Each tooth (6) of the plurality teeth comprises a rake surface (7), a clearance surface (8), and a cutting edge (9), which extends axially rearward from a radially outer region at the front end (3) at an intersection of the rake surface (7) with the clearance surface (8). The clearance surface (8) comprises a primary clearance surface (13) rotationally directly behind the cutting edge (9), and wherein, in each position along the cutting edge (9), the primary clearance surface (13) has a primary radial clearance angle α, and a secondary clearance surface (16) rotationally directly behind the primary clearance surface (13). The plurality of teeth (6) comprises at least one differential tooth (6), wherein the primary radial clearance angle α of each differential tooth (6) varies repeatedly along the extension of the cutting edge (9), and wherein, in a majority of axial positions along the extension of the cutting edge (9), the primary radial clearance angle α of each differential tooth (6) is different from the primary radial clearance angle α of at least another tooth (6) of the plurality of teeth (6).

## Description

### Technical field

The present invention relates to a milling tool metal cutting.

### Background

A wide range of components are machined from many different types of material, such as metal, composites or combinations thereof. Accordingly, a variety of different cutting tools, and in particular milling tools have been developed. Conventionally, a milling tool comprises a plurality of cutting teeth, which extend axially along the tool. The teeth have cutting edges formed at an intersection of a rake face and a clearance face, and follow the axial extension of the teeth. During operation the milling tool is rotated in a direction of rotation around a central longitudinal axis and fed in a radial direction. The cutting edges cut a surface in the radial feed direction.

A problem with such known milling tools is, that in some operations, the milling tools are exposed to conditions causing resonance and resulting vibrations, which in turn affect the surface quality of the cut surface.

### Summary

It is an object of the present invention to at least partly obviate the above mentioned problems. This object is achieved according to the invention by means of a milling tool according to claim 1.

The present invention relates to a milling tool for metal cutting comprising a body with a cutting head, which cutting head has a front end and a central longitudinal axis extending rearward from the front end, is rotatable around the longitudinal axis in a direction of rotation, and defines a cutting circle with a cutting diameter, wherein the cutting head comprises a plurality of radially protruding and axially extending teeth, wherein each tooth of the plurality teeth comprises
- a rake surface,
- a clearance surface, and
- a cutting edge, which extends axially rearward from a radially outer region at the front end at an intersection of the rake surface with the clearance surface,
wherein the clearance surface comprises
- a primary clearance surface rotationally directly behind the cutting edge, and wherein, in each position along the cutting edge, the primary clearance surface has a primary radial clearance angle α, and
- a secondary clearance surface rotationally directly behind the primary clearance surface,
wherein the plurality of teeth comprises at least one differential tooth wherein
- the primary radial clearance angle α of each differential tooth varies repeatedly along the extension of the cutting edge, and wherein,
- in a majority of axial positions along the extension of the cutting edge, the primary radial clearance angle α of each differential tooth is different from the primary radial clearance angle α of at least another tooth of the plurality of teeth.

Each tooth of the plurality of teeth of the milling tool comprises a primary clearance surface, which is the clearance surface rotationally directly behind the cutting edge. In each position along the cutting edge, the primary clearance surface has a primary radial clearance angle.

The plurality of teeth comprises at least one differential tooth. The primary clearance surface of each differential tooth has a repeatedly varying radial clearance angle along the extension of the cutting edge. Thereby, the wedge angle of the surfaces rotationally behind the cutting edge, i.e. a rake surface and the clearance surface, vary along the axial extension of the cutting edge. A sharper, smaller wedge angle cuts more easily, while a more dull, larger wedge angle is sturdier and subjected to higher cutting forces. By repeating values of the primary clearance angle, a sufficient variation is achieved without deviating too much from a desired norm value.

In a majority of axial positions of each differential tooth, the primary radial clearance angle is different form the primary radial clearance angle of at least one another tooth. Thereby, in the majority of axial positions, at least two teeth are subjected to different cutting forces, which, due to the varying primary radial clearance angle, also vary along the cutting edge. Thereby, advantageously, the tool is less likely to resonate and thus less prone to vibrating so that a milling tool that achieves an improved surface quality is achieved.

The present invention relates to a milling tool for metal cutting, such as chip removing metal cutting. The milling tool comprises a body with a cutting head. Optionally, the milling tool is of a type wherein the cutting head is a one-piece integral unit with a shaft, sometimes referred to as "solid round tools". Alternatively, the milling tool is an exchangeable head and is connectable to a shaft. Optionally, the shaft has a coupling at a rear end. Through the shaft, the cutting head of the solid round tool or of the exchangeable head, respectively, is connectable to a machine spindle, or to an adapter for a machine spindle. The machine spindle typically is part of a machine, for example a CNC machine. Preferably, the milling tool comprises a wear resistant material such as for example coated or non-coated cemented carbide, cermet, ceramic, CBN or steel.

The cutting head has a front end and a central longitudinal axis extending rearward from the front end, wherein the cutting head is rotatable, for example by the machine spindle, around the longitudinal axis in a direction of rotation. Preferably, the front end of the cutting head is an axially forwardly facing end surface of the milling tool.

According to an embodiment, the cutting head is elongated in the longitudinal direction. Optionally, the axial length of the cutting head is equal or smaller, preferably larger, than the cutting diameter.

The cutting head comprises a plurality of teeth, for example, at least two, preferably at least four teeth. For example, the cutting head comprises at most ten, preferably at most six teeth. The teeth extend axially rearward from a radially outer region of the front end. Each tooth protrudes radially, preferably from a peripheral surface of the body of the cutting head and presents a cutting edge, which is mainly radially cutting.

According to embodiments, the milling tool has teeth provided in the front end of the cutting head. Each such tooth in the front end extends radially outward from a central region at the longitudinal axis and each present a mainly axially forward cutting front cutting edge. Optionally, all teeth extend both axially along the periphery and radially along the front end, wherein they meet at a forward radially outer region. Alternatively, some or all teeth extend only along the front end in a radial direction, or only along the periphery in an axial direction. Milling tools with cutting edges at the front may be fed also in an axial direction, for example during plunging operations.

The cutting head defines a cutting circle with a cutting diameter. The cutting circle is to be understood as the circle formed by the radially most outer point of any of the cutting edges when the milling tool is rotated one turn around the longitudinal axis without feeding the tool in any direction. The direction of rotation is the direction that the milling tool is rotated during normal cutting operation. Preferred cutting diameters are 2-25 mm.

Each cutting edge is formed at an intersection of a respective rake surface and a respective clearance surface. The axial extension of the side cutting edge rearward from the front end is for example less than, equal to or longer than the cutting diameter, and preferably 1 - 5 times the cutting diameter. According to a preferred embodiment, the cutting edges are continuous. Alternatively, the side cutting edges are interrupted by grooves. In applications, grooves are beneficial for reducing the breadth of cut chips, or for creating additional minor cutting edges.

Preferably, the cutting head comprises a plurality of chip flutes, which, rotationally in front of a respective one of the plurality of teeth, each extends axially rearward from the front end. The chip flutes are typically recessed in and extend along the peripheral surface of the body of the cutting head.

Optionally, each chip flute extends in parallel with the longitudinal axis, or with an angle to the longitudinal axis, such as for example forming a helix. Optionally, the angle of the chip flutes varies or is constant, for example, the angle decreases or increases axially rearward from the front end. The angle is for example 0°, i.e. the chip flute is parallel with longitudinal axis, or least 10° and at most 60°, preferably, at least 20° and at most 50°. Within this range, the chip flutes provide satisfactory chip evacuation and/or chip breaking for most applications. Each cutting edge preferably follows the chip flute, and has the same angle to the longitudinal axis as the chip flute, which is rotationally in front thereof.

The clearance surface of each tooth comprises a primary clearance surface rotationally directly behind the cutting edge. In each position along the cutting edge, the primary clearance surface has a primary radial clearance angle. The radial clearance angle of a point of the cutting edge may be measured in an axial cross section at the point, i.e. in a cross section with longitudinal axis as normal. In this view, the radial clearance angle is the angle between a tangent to a circle cut by the point when the milling tool is rotated without feed, and the primary clearance surface.

The plurality of teeth comprises at least one differential tooth. The primary radial clearance angle of each differential tooth varies repeatedly along the axial extension of the cutting edge. In other words, in different positions along an axial portion where the cutting edge extends, the primary radial clearance angle has different values. The repeated variation is to be understood such that different values are repeated in different axial positions. Therein, each value is found in at least two different positions along the axial extension of the cutting edge.

Furthermore, in a majority of axial positions along the extension of the cutting edge, the primary radial clearance angle of each differential tooth is different from the primary radial clearance angle of at least another tooth of the plurality of teeth. Preferably, the primary radial clearance angle of each differential tooth is different from the primary radial clearance angle of the at least another tooth in each axial position along the extension of the cutting edge. Thereby, advantageously the two teeth are subjected to different cutting forces in all axial positions. Alternatively, the primary radial clearance angle of each differential tooth is the same as the primary radial clearance angle of the at least another tooth of the plurality of teeth in some axial positions. Thereby a level of variation of cutting forces is achieved which is sufficient to limit vibrations enough for the intended operation.

Optionally, the at least another tooth is a differential tooth, or, for example, a conventional tooth. A conventional tooth typically has a primary radial clearance angle that is constant along the axial extension of the cutting edge. Preferably, each tooth of the plurality of teeth is a differential tooth. In other words, all teeth of the cutting head are differential teeth. In this way, all teeth, along their respective cutting edge, have a repeatedly varying primary radial clearance angle. Thereby, variation of cutting forces along all cutting edges is ensured during operation, which is beneficial for limiting vibrations.

In a preferred embodiment with only differential teeth, in each axial position, the primary radial clearance angle of each differential tooth is different from the primary radial clearance angle of all other differential teeth. Thereby the cutting forces that the tool is subjected to during operation vary both in the axial extension and in a circumferential extension, which is beneficial for limiting vibrations.

According to a preferred embodiment, the primary radial clearance angle of each differential tooth varies periodically along the extension of the cutting edge. For example, the primary radial clearance angle is varied according to a pattern, wherein the pattern is repeated along the cutting edge. The shortest axial length of the repeated pattern is to be understood as the period of the variation of the primary radial clearance angle. To vary the primary radial clearance angle in this way allows for a less complex design.

Preferably, an axial length of the period is 10 - 40 % of the cutting diameter, and/ preferably 20 - 30% of the cutting diameter. According to an embodiment, the axial length of the period is 20% of the cutting diameter. These lengths ensure a variation in the primary radial clearance angle that provides low vibrations for most applications.

According to preferred embodiments, the period is a period of a sinus, zigzag, parabolic curve, or any other oscillating curve. Thereby, the variations of the primary radial clearance angle is smooth and easier to produce by for example continuously adjusting the distance of a grinding wheel and the angular position of a blank form which the milling tool is produced.

Preferably to an embodiment with at least two differential teeth, the period of the primary radial clearance angle is the same in at least two differential teeth, and the periodic variation of the primary radial clearance angle is phase shifted between the at least two differential teeth. According to an embodiment, the period of the primary radial clearance angle is the same in all of the differential teeth, and the periodic variation of the primary radial clearance angle is phase shifted between all the differential teeth. In such an embodiment, preferably, the period of the primary radial clearance angle is phase shifted between rotationally directly consecutive differential teeth by the axial length of the period divided by the number of the plurality of differential teeth. These designs provide an efficient way to provide at least two or all differential teeth with different primary radial angles in each axial position. In an alternative embodiment, different differential teeth have different period, which is a more complex design that may perform satisfactory.

According to an embodiment wherein the primary radial clearance angle of each differential tooth varies periodically along the extension of the cutting edge, in each period, the primary radial clearance angle has a maximum which is the maximum in each period. The maximum of the primary clearance angle is 9 - 15°, preferably10 - 12°. Generally, the primary clearance angle ensures on one hand that during operation there is clearance between the clearance surface and the machined work piece behind the cutting edge, and on the other hand, that the cutting edge has support. For most applications, a primary radial clearance angle of 10° provides sufficient clearance while at the same giving sufficient support. A smaller maximum than 9° affects negatively the range available for varying the primary radial clearance angle, which causes a smaller variation of cutting forces and possibly undesired vibrations. Preferably, the maximum primary radial clearance angle is a nominal primary radial clearance angle of the tool, wherein the nominal primary radial clearance angle is the primary radial clearance angle the tool is designed and calibrated for.

Preferably, in each period, the primary radial clearance angle has in addition a minimum which is the minimum in each period. The minimum of the primary radial clearance angle is at least 1 - 5° less, preferably 2-4° less than the maximum of the primary radial clearance angle. Smaller primary radial clearance angles may not provide sufficient clearance for all operations. A larger minimum affects negatively the range available for varying the primary radial clearance angle, causes a smaller variation of cutting forces and possibly undesired vibrations.

Depending on the periodic variation, the maximum and minimum may occur one or several times within the period. Preferably, the primary radial clearance angles are chosen.

Optionally, in each axial position along the cutting edge of each tooth, the primary clearance surface has a primary breadth. The primary breadth of the clearance surface behind of a point of the cutting edge may be measured in an axial cross section at the point, i.e. in a cross section with longitudinal axis as normal. In this view, the primary breadth is the length of the primary clearance surface in the direction of a tangent to a circle cut by the point when the milling tool is rotated without feed.

According to an embodiment, the primary breadth of each differential tooth varies repeatedly along the extension of the cutting edge, and in a majority of axial positions, the primary breadth of each differential tooth is different from the primary breadth of at least another tooth of the plurality of teeth. The varying breadth of the primary clearance surface advantageously increases further the variation of the cutting forces. In an alternative embodiment, the primary breadth is constant along the cutting edge.

Preferably, the primary breadth varies periodically along the extension of the cutting edge, wherein the period of the primary breadth is the same as the period of the primary radial clearance angle. More preferably, the periodic variation of the primary breadth is in antiphase with the periodic variation of the primary radial clearance angle. This design simplifies grinding of the varying primary clearance angle during production of the milling tool.

According to an embodiment wherein the primary breadth of each differential tooth varies periodically along the extension of the cutting edge, the primary breadth of each differential tooth is 1 - 10%, preferably 3 - 8% of the cutting diameter. These ranges are sufficiently broad to allow for enough variation of the breadth to contribute to creating varying cutting forces along the cutting edge which in turn further limits vibrations in the milling tool during operation. A smaller breadth may unnecessarily weaken the cutting edge and risk sufficient support during operation. A larger breadth could negatively affect the space of the chip flute or the tool may begin to rub on the workpiece due to lack of clearance.

According to an embodiment, in each position along the cutting edge, the secondary clearance surface has a secondary radial clearance angle, which is the same in each position. The secondary clearance surface of each of the differential teeth ensures sufficient clearance for a rotationally rear edge. The secondary radial clearance angle may be measured correspondingly to the primary radial clearance angle as explained above. The secondary radial clearance angle preferably is larger than the maximum of the primary radial clearance angle. A constant secondary radial primary clearance angle is advantageously for grinding during production of the milling tool.

Preferably, as seen in an axial cross section, the primary clearance surface and/or the secondary radial clearance surface of each differential tooth are/is linear. Production of the milling tool is easier with a constant clearances.

### Brief description of the drawings

In the following, an example embodiments will be described in greater detail and with reference to the accompanying drawings, in which:
Fig. is a side view of the embodiment of the milling tool for metal cutting according to the invention;
Fig. 2 is a perspective view of the embodiment of the subject milling tool;
Fig. 3 is a front end view of the embodiment of the subject milling tool;
Figs. 4a - 7a indicate the location of axial cross sections as shown in Figs. 4b - 7b.

All the figures are schematic, not necessarily to scale, and generally only show parts which are necessary in order to elucidate the respective embodiments, whereas other parts may be omitted or merely suggested. Unless otherwise indicated, like reference numerals refer to like parts in different figures.

### Detailed description

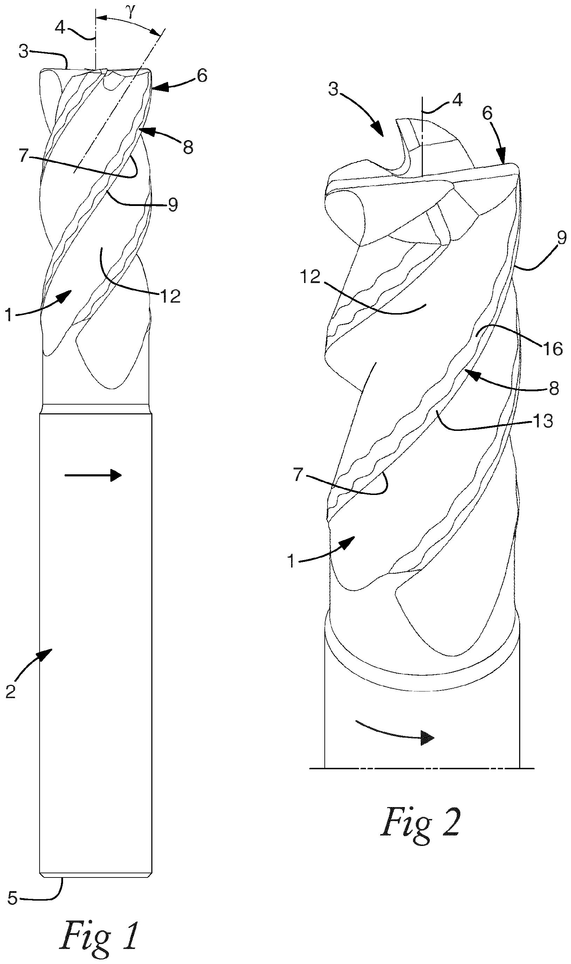

With reference to Figs. 1 - 7, an embodiment of the milling tool is shown. The milling tool comprises a body with a cutting head 1 and a shaft 2, which together form an integral unit. The milling tool of the shown embodiment is a solid round tool in form of a square end mill tool. The milling tool is connectable to a spindle of a CNC machine by means of the shaft 2. The milling tool comprises a wear resistant material of coated cemented carbide.

The cutting head 1 has a front end 3, which is also the front end of the milling tool, and a central longitudinal axis 4 extending rearward from the front end 3. The front end 3 of the cutting head 2 is an axially forwardly facing end surface of the milling tool.

The axis 4 is the central longitudinal axis of the milling tool. The milling tool has a rear end 5 at the axially opposite end to the front end 3.

The cutting head 1 comprises a plurality of teeth, which each has a cutting edge 9 formed at an intersection of a respective rake surface 7, and a respective clearance surface 8. The milling tool according to the embodiment comprises four teeth 6, which all constitute differential teeth. Each tooth 6 has a portion that protrudes radially from a peripheral surface of the body of the cutting head and extends axially rearward from the front end. This portion presents a cutting edge 9 which during operation cuts mainly in the radial direction. In addition, each tooth 6 has a portion that protrudes axially from the front end surface and extends radially outward from a central region. This portion presents a cutting edge which during operation cuts mainly in an axial direction. The two portions meet at a forward, radially outer region.

The cutting head 1 comprises a plurality of chip flutes 12, which are recessed in the peripheral surface and extend axially rearward from the front end 3. Each chip flute 12 extends rotationally in front of a respective one of the plurality of teeth 6. Each chip flute 12 forms a helix and has a helix angle γ to the longitudinal axis 4. The helix angle γ of each tooth 6 is constant, wherein every second tooth has a different helix angle γ. Two of the teeth have an helix angle γ of 35° and two of 38°.

The cutting edges 9 each has radially most outer point at the same radial distance from the longitudinal axis 4. The cutting head 2 defines a cutting circle 10 formed by the radially most outer points of the cutting edges when the milling tool is rotated one turn around the longitudinal axis 4 without being fed in any direction. The cutting circle 10 has a cutting diameter 11, which in the shown embodiment is 10 mm. The direction of rotation is the direction that the milling tool is rotated during normal cutting operation and is indicated by an arrow in Figs. 1 and 2. The cutting head 1 has an elongated extension along the longitudinal axis 4 which is approximately two times the cutting diameter of the cutting circle 10.

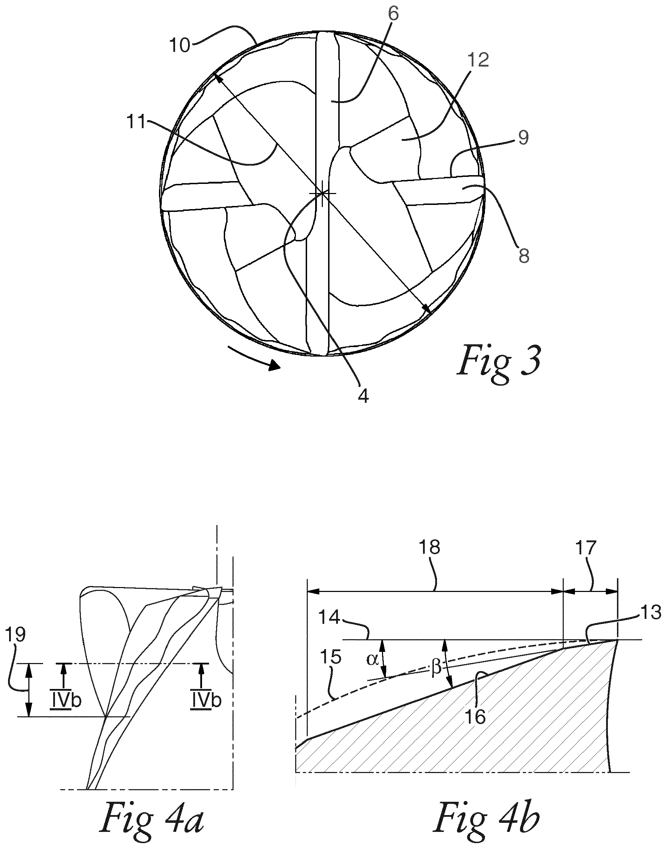

The clearance surface 8 of each tooth 6 comprises a primary clearance surface 13 rotationally directly behind the cutting edge 9. In each position along the cutting edge, the primary clearance surface 13 has a primary radial clearance angle α. The clearance surface 8 of each tooth 6 comprises a secondary clearance surface 16 rotationally directly behind the primary clearance surface 13. In each position along the cutting edge, the secondary clearance surface 16 has a secondary radial clearance angle β. As indicated in Figs 4b - 7b, the radial clearance angle α, β of a point of the cutting edge is measured in an axial cross section at the point. In the view of the figures, the radial clearance angle α, β is the angle between a tangent 14 to a circle 15 cut by the point when the milling tool is rotated without feed, and the primary clearance surface 13 or the secondary clearance surface 16.

In each axial position along the cutting edge 9 of each tooth 6, the primary clearance surface 13 has a primary breadth 17. Similarly, in each axial position along the cutting edge 9 of each tooth 6, the secondary clearance surface 16 has a secondary breadth 18. As indicated in Figs 4b -7b, the breadth 17, 18 of the clearance surface behind of a point of the cutting edge is measured in an axial cross section at the point, i.e. in a cross section with longitudinal axis as normal. In the view of the figures, the breadth is the length of the primary clearance surface in the direction of the tangent 14.

The primary radial clearance angle α of each tooth 6 varies repeatedly along the axial extension of the cutting edge in form of a periodic variation. The period is a period of a sinus curve. An axial length 19, c.f. Fig. 4a, of the period is 20% of the cutting diameter 11, and in the shown embodiment 2 mm. In each axial position, the primary radial clearance angle α of each tooth 6 is different from the primary radial clearance angle α of all other teeth 6. Specifically, the period of the primary radial clearance angle α is phase shifted between rotationally directly consecutive teeth 6 by the axial length 19 of the period divided by the number of the plurality of teeth 6, in this case four.

Also the primary breadth17 and the secondary breadth 18 vary periodically, and with the same period as the primary radial clearance angle α. The primary breadth 17 is in phase with the primary radial clearance angle α, while the secondary breadth 18 is in antiphase therewith. The secondary radial clearance angle β is the same in each axial position and does consequently not vary.

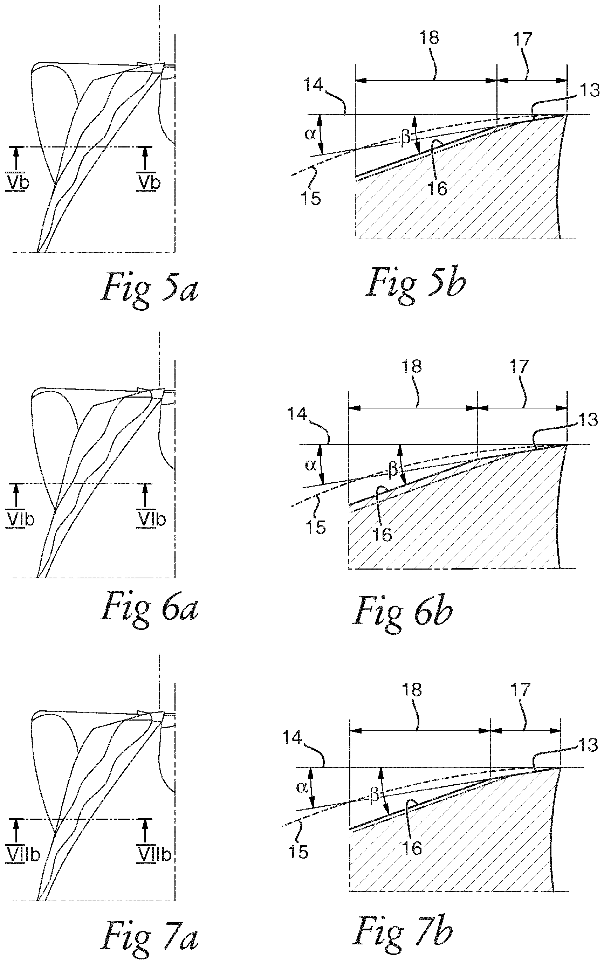

Since all teeth therefore only differ in phase, in the following only one tooth is described with reference to Figs. 4a, b - 7a, b.

Figs. 4a, b show an axial cross section where the primary radial clearance angle α has maximum, which is 10°. In this axial position, the primary breadth has a minimum, which is 4% of the cutting diameter 11, which in the present embodiment corresponds 0,4 mm. The secondary breadth 18 has a maximum, which is 12% of the cutting diameter 11 and which corresponds to 1,2mm . The secondary radial clearance angle β is 20 °.

The secondary radial clearance angle β is the same in each axial position and thus the same in all shown Figures 4b - 7b. Furthermore, the primary clearance surface 13 and the secondary clearance surface 16 are both linear in each axial position and thus in all Figs. 4b - 7b.

Figs. 5a, b show an axial cross section which is located an axial distance corresponding to 0,25 times the axial length 19 of the period from the axial position of Fig. 4a. In this axial position, the primary radial clearance angle α has a value in between the maximum and the minimum, and specifically 1,5° less than the maximum of the primary radial clearance angle α, and thus amounts to 8,5°. The primary breadth 17 has a value in between the maximum and the minimum and specifically 6% of the cutting diameter 11, which in the present embodiment corresponds 0,6mm. The secondary radial clearance angle β is 20 ° The secondary breadth 18 has a value in between the maximum and the minimum, which is 9% of the cutting diameter 11 and specifically 0,9mm.

In order to avoid a discontinuity at the transition of the primary clearance surface 13 to the secondary clearance surface 16 due to the varying primary radial clearance angle α, the secondary clearance surface 16 has a varying distance to the central longitudinal axis 4, this is in Figs. 5b -7b, indicated by a dotted line showing the position of the secondary clearance surface in the axial position of Fig. 4b.

Figs. 6a, b show an axial cross section where the primary radial clearance angle α has minimum, which is 3° less than the maximum of the primary radial clearance angle α, and thus amounts to 7°. This axial position is located an axial distance of 0,5 times the axial length 19 of the period from the axial position of Fig. 4a. In the axial position of Fig. 6a, the primary breadth has a maximum, which is 7% of the cutting diameter 11, which in the present embodiment corresponds 0,7mm. The secondary radial clearance angle β is 20 °. The secondary breadth 18 has a minimum, which is 6% of the cutting diameter 11 and which corresponds to 0,6mm . The secondary radial clearance angle β is 20 °.

Figs. 7a, b show an axial cross section which is located an axial distance corresponding to 0,75 times the axial length 19 of the period from the axial position of Fig. 4a. This cross section is identical to the cross section of Fig. 5a, b.

## Claims

1. A milling tool for metal cutting comprising a body with a cutting head, which cutting head (1)
- has a front end (3) and a central longitudinal axis (4) extending rearward from the front end (3),
- is rotatable around the longitudinal axis (4) in a direction of rotation, and
- defines a cutting circle (10) with a cutting diameter (11),
wherein the cutting head (1) comprises a plurality of radially protruding and axially extending teeth (6), wherein each tooth (6) of the plurality teeth comprises
- a rake surface (7),
- a clearance surface (8), and
- a cutting edge (9), which extends axially rearward from a radially outer region at the front end (3) at an intersection of the rake surface (7) with the clearance surface (8),
wherein the clearance surface (8) comprises
- a primary clearance surface (13) rotationally directly behind the cutting edge (9), and wherein, in each position along the cutting edge (9), the primary clearance surface (13) has a primary radial clearance angle α, and
- a secondary clearance surface (16) rotationally directly behind the primary clearance surface (13),
**characterize in that**
the plurality of teeth (6) comprises at least one differential tooth (6), wherein
- the primary radial clearance angle α of each differential tooth (6) varies repeatedly along the extension of the cutting edge (9), and wherein,
- in a majority of axial positions along the extension of the cutting edge (9), the primary radial clearance angle α of each differential tooth (6) is different from the primary radial clearance angle α of at least another tooth (6) of the plurality of teeth (6).

2. The milling tool as claimed in claim 1, wherein the primary radial clearance angle α of each differential tooth (6) varies periodically along the extension of the cutting edge (9).

3. The milling tool as claimed in claim 2, wherein an axial length of the period is 10 - 40 % of the cutting diameter (11), and/ preferably 20 - 30% of the cutting diameter (11).

4. The milling tool as claimed in claim 2 or 3, wherein the period is a period of a sinus, zigzag, or parabolic curve.

5. The milling tool as claimed in any claim 2-4, wherein the plurality of teeth (6) comprises a plurality of differential teeth (6), wherein
- the period of the primary radial clearance angle α is the same in at least two differential teeth (6), and
- the periodic variation of the primary radial clearance angle α is phase shifted between the at least two differential teeth (6).

6. The milling tool as claimed in claim 5, wherein
- the period of the primary radial clearance angle α is the same in all of the differential teeth (6), and
- the periodic variation of the primary radial clearance angle α is phase shifted between all the differential teeth (6).

7. The milling tool as claimed in claim 6, wherein the period of the primary radial clearance angle α is phase shifted between rotationally directly consecutive differential teeth (6) by the axial length of the period divided by the number of the plurality of differential teeth (6).

8. The milling tool as claimed in claim 2-6, wherein in each period, the primary radial clearance angle α has a maximum wherein
- the maximum of the primary radial clearance angle α is the maximum in each period, and wherein
- the maximum of the primary clearance angle α is 9 - 15°, preferably10 - 12°.

9. The milling tool as claimed in claim 8, wherein in each period, the primary radial clearance angle α has a minimum, wherein
- the minimum of the primary clearance angle α is the minimum in each period, and wherein
- the minimum of the primary radial clearance angle α is at least 1 - 5° less, preferably 2-4° less than the maximum of the primary radial clearance angle α.

10. The milling tool as claimed in any preceding claims, wherein, in each axial position along the cutting edge (9) of each tooth, the primary clearance surface (13) has a primary breadth (17), wherein
- the primary breadth (17) of each differential tooth (6) varies repeatedly along the extension of the cutting edge (9), and wherein
- in a majority of axial positions, the primary breadth (17) of each differential tooth (6) is different from the primary breadth (17) of at least another tooth (6) of the plurality of teeth (6).

11. The milling tool as claimed in any claim 2-9, and claim 10, wherein the primary breadth (17) of each differential tooth (6) varies periodically along the extension of the cutting edge (9), wherein the period of the primary breadth (17) is the same as the period of the primary radial clearance angle α.

12. The milling tool as claimed in claim 11, wherein the periodic variation of the primary breadth (17) is in antiphase with the periodic variation of the primary radial clearance angle α.

13. The milling tool as claimed in claim 10 or 11, wherein the primary breadth (17) of each differential tooth is 1 - 10%, preferably 3 - 8% of the cutting diameter (11).

14. The milling tool as claimed in any preceding claim, wherein, in each position along the cutting edge (9), the secondary clearance surface (16) of each differential tooth (6) has a secondary radial clearance angle β, which is the same in each position.

15. The milling tool as claimed in any preceding claim, wherein, as seen in an axial cross section, the primary clearance surface (13) and/or the secondary clearance surface (16) of each differential tooth (6) are/is linear.

16. The milling tool as claimed in any preceding claim, wherein each tooth (6) of the plurality of teeth (6) is a differential tooth (6).

17. The milling tool as claimed in claim 16, wherein, in each axial position, the primary radial clearance angle α of each differential tooth (6) is different from the primary radial clearance angle α of all other differential teeth (6).
